# EUROPEAN PATENT APPLICATION

(11) **EP 4 726 826 A1**
(43) Date of publication of application: **15.04.2026**
(21) Application number: 25204295.7
(22) Date of filing: 24.09.2025
(51) Int. Cl.: H01M 10/04, H01M 10/0587, H01M 10/613, H01M 10/6551, H01M 50/103, H01M 50/586, H01M 50/595, H01M 10/647, H01M 10/658, H01M 50/209

(54) **PRISMATIC-HOUSING BATTERY**

(30) Priority: 10.10.2024 CN 202422442557 U
(71) Applicant: AESC Japan Ltd., Yokohama-shi, Kanagawa 220-0012 (JP)
(72) Inventor: WANG, Yunhui, Jiangyin City, Wuxi City, 214443 (CN); ZHAO, Jialiang, Jiangyin City, Wuxi City, 214443 (CN)
(74) Representative: Becker, Eberhard

(57) **Abstract**

A prismatic-housing battery (100) including a housing (10) and two cell assemblies (20) accommodated in the housing (10) is provided. Each cell assembly (20) includes at least two cells (30) stacked along a first direction (A) and a first insulation tape (41) covering the first corner area (305a) of the second cell (32). An outer peripheral surface of each cell (30) along a winding direction (B) includes two plane areas (304) and a first corner area (305a) and a second corner area (305b). The cell (30) adjacent to the housing (10) along the first direction (A) is a first cell (31), and the cell (30) adjacent to another cell assembly (20) is a second cell (32). One end of the first insulation tape (41) extends to the first corner area (305a) of the first cell (31) through the first corner area (305a) of the second cell (32).

## Description

### BACKGROUND

### Technical Field

The present disclosure relates to lithium battery technology, and particularly relates to a prismatic-housing battery.

### Description of Related Art

A cell within a prismatic-housing battery is formed by winding stacked positive electrode and negative electrode together with separators. An outer peripheral surface of the cell along a winding direction includes a corner area and a plane area. There is a curvature on the outer peripheral surface of the cell in the corner area, where thermal compression treatment cannot be applied, and therefore there are large gaps between the positive electrode and negative electrode and the separators in the corner area and the contact between them is not close. As a result, a surface of the negative electrode in the corner area is prone to lithium plating phenomena during a long-term cycling of the battery, and the performance of the battery is affected. Moreover, in current common products manufactured in mass production, due to limitations in manufacturing processes and other factors, prismatic-housing battery with a certain degree of thickness often adopt a multi-core stacking design, which increases the number of corner areas within the battery and enlarges a bending angle of the positive electrode and negative electrode and the separators in the corner areas, consequently causing lithium plating abnormalities to have a more adverse impact on the performance of the battery.

### SUMMARY

The technical problem to be solved by the present disclosure is to overcome the defect of the existing technology that a cell in the current technology is prone to lithium plating abnormality, affecting the performance of a battery, and to provide a prismatic-housing battery.

The present disclosure solves the above technical problems through the following technical scheme:
A prismatic-housing battery includes a housing and two cell assemblies accommodated in the housing. Each of the cell assemblies includes at least two cells stacked along a first direction, wherein an outer peripheral surface of each of the cells along a winding direction includes two plane areas and a first corner area and a second corner area respectively connected to two opposite ends of the two plane areas. The two plane areas are both perpendicular to the first direction. The cell adjacent to the housing along the first direction in the cell assemblies is a first cell. The two plane areas of the first cell include a first plane area adjacent to the housing. The cell adjacent to the other cell assembly of the cell assemblies is a second cell.

Each of the cell assemblies further includes a first insulation tape. The first insulation tape covers at least a portion of a first corner area of the second cell, and one end of the first insulation tape extends to a first corner area of the first cell through the first corner area of the second cell.

By forming the cell assemblies with two or more cells, and then accommodating the two cell assemblies in the housing, the design facilitates the overall processing and manufacturing of the prismatic-housing battery. The cell assembly is set with a first insulation tape to cover the first corner area of each of the cells in the cell assembly, so that the first insulation tape tightens the corner areas of the respective cells, and therefore the electrodes and the separators in the first corner area of the cell are attached tightly, thus improving the lithium plating phenomenon.

Additionally, one end of the first insulation tape extends to a surface of the first corner area of the first cell through the first corner area of the second cell, rather than extending to the first plane area of the first cell, so as to increase a coverage area of the first insulation tape on the surface of the corner area of the cell assembly while avoiding an increase in an overall thickness dimension of the cell due to the setting of the first insulation tape in the plane area. In this way, the prismatic-housing battery is able to accommodate more cells along the first direction to have a relatively higher energy density.

Preferably, one end of the first insulation tape extends to a junction between the first corner area and the first plane area of the first cell through the first corner area of the second cell.

In the condition that the first insulation tape does not extend to the first plane area of the first cell, by enabling an end portion of the first insulation tape to extend to the junction between the first corner area and the first plane area of the first cell, it is possible to increase the coverage area of the first insulation tape on the corner area of the first cell.

Preferably, the other end of the first insulation tape is disposed at a junction between the first corner area of the second cell and a plane area of the second cell.

By setting the other end of the first insulation tape at the junction between the first corner area of the second cell and the plane area of the second cell, it is possible to increase a coverage area of the first insulation tape on the corner area of the second cell.

The end portion of the first insulation tape is disposed at the junction between the first corner area and the plane area of the second cell without extending to the surface of the plane area. In this way, it is possible to avoid the increase in the overall thickness dimension of the cell due to the setting of the first insulation tape in the plane area of the cell, so that the prismatic-housing battery is able to accommodate more cells in the first direction to have a relatively higher energy density.

Preferably, the prismatic-housing battery further includes a heat dissipation medium. The heat dissipation medium is disposed between the two cell assemblies.

By setting the heat dissipation medium with a heat conduction capacity between two adjacent cell assemblies, the heat conduction capacity between the cell assemblies is improved, thereby enhancing the overall heat dissipation capacity of the prismatic-housing battery.

Preferably, two of the plane areas of the second cell include a second plane area adjacent to the other cell assembly. The heat dissipation medium is disposed between the second plane areas of the two cell assemblies. The heat dissipation medium is connected with the end portion of the first insulation tape.

By setting the heat dissipation medium with the heat conduction capacity between the second plane areas of the two cell assemblies, the heat conduction capacity between the cell assemblies is improved.

By connecting the heat dissipation medium with the end portion of the first insulation tape, it is possible to enhance a connection relationship between the first insulation tape and each of the cells, thus improving the tightening capacity of the cell on each of the corner areas.

Meanwhile, the heat dissipation medium is connected with the end portion of the first insulation tape. The continuation of a heat conduction path of the heat dissipation medium and the first insulation tape enables the heat of the heat dissipation medium to be transmitted outward through the first insulation tape to have a better heat dissipation capacity.

Preferably, the cell is formed by winding a positive electrode, a negative electrode and a separator. The separator is sandwiched between the positive electrode and the negative electrode, and a tail end of the separator extends beyond tail ends of the positive electrode and the negative electrode.

The prismatic-housing battery further includes a finishing tape. The finishing tape is adhered to the tail end of the separator and fixes the tail end of the separator to the outer peripheral surface of the cell. The finishing tape and the heat dissipation medium are disposed in a staggered arrangement on the outer peripheral surface of the cell.

Preferably, the prismatic-housing battery further includes a second insulation tape. The second insulation tape covers at least a portion of the first corner area of the second cell of the two cell assemblies.

Alternatively, the second insulation tape covers at least a portion of a second corner area of the second cell of the two cell assemblies.

The prismatic-housing battery fixes positions of the two cell assemblies by setting the second insulation tape to at least cover corner portions (the first corner area or the second corner area) of the second cell of the two cell assemblies, thereby avoiding shift of the cell assemblies during the processing and manufacturing process, facilitating the accommodation of the cells in the housing, and also facilitating the implementation of subsequent manufacturing processes (e.g., connecting tabs of the two cell assemblies).

Preferably, the prismatic-housing battery further includes a second insulation tape. At least one end of the second insulation tape extends to a second corner area of the first cell of at least one of the cell assemblies.

The second insulation tape extends to the second corner area of the first cell of the cell assembly, so that the second insulation tape tightens a portion of the first cell of the cell assembly that is not covered by the first insulation tape, thus enabling the electrode sheet and the separator in the corner area on that side to fit more closely.

Preferably, the prismatic-housing battery further includes the second insulation tape. At least one end of the second insulation tape extends to a surface of the first insulation tape of at least one of the cell assemblies.

The second insulation tape covers the surface of the first insulation tape of the cell assembly to structurally reinforce the first insulation tape, thus improving the tightening effect of the first insulation tape on the corner area of the cell that is covered.

The scheme of covering one end of the second insulation tape on the surface of the first insulation tape of one cell assembly while the other end extending to the corner area of the first cell of the other cell assembly may be adapted to different core combining schemes of the cells, thus avoiding interference with the already adhered first insulation tape.

Preferably, the cell is formed by winding the positive electrode, the negative electrode and the separator. The separator is sandwiched between the positive electrode and the negative electrode. Along a width direction of the separator, a width D₁ of the first insulation tape has a value ranging from 60% to 90% of a width D of the separator.

By enabling the first insulation tape to adhere to and cover the surface of the corner area of the cell over a large area, it is possible to improve an effective area between the first insulation tape and the corner area of the cell, so that the first insulation tape is able to better tighten the electrode sheet and the separator of the cell.

Preferably, the first insulation tape includes at least two first sub-insulation tapes. Each of the first sub-insulation tapes covers at least a portion of the first corner area of the second cell, and one end of each of the first sub-insulation tapes extends to the first plane area through the first corner area of the first cell. Each of the first sub-insulation tapes is arranged at intervals along the width direction of the separator of the cell.

By setting multiple first sub-insulation tapes to jointly form the first insulation tape, the process difficulty of setting the first insulation tape on each of the cells of the cell assembly is reduced while ensuring the coverage area of the first insulation tape on the outer peripheral surface of the cell.

The positive progressive effects of the present disclosure lie in the following:
In the prismatic-housing battery, a cell assembly is formed by two or more cells, and then two cell assemblies are accommodated in the housing, thus facilitating the overall processing and manufacturing of the prismatic-housing battery.

By setting the first insulation tape to cover the first corner area of the respective cells in the cell assembly, a tightening effect is produced on the corner areas of the respective cells, thus enabling the electrode sheet and the separator of the cell to fit tightly in the first corner area, and thereby mitigating the lithium plating phenomenon.

By extending one end of the first insulation tape to the surface of the first corner area of the first cell through the first corner area of the second cell, rather than extending to the first plane area of the first cell, it is possible to increase the coverage area of the first insulation tape on the surface of the corner area of the cell assembly while avoiding the increase in the overall thickness dimension of the cell due to the setting of the first insulation tape in the plane area of the cell. In this way, the prismatic-housing battery is able to accommodate more cells along the first direction to have a relatively higher energy density.

### BRIEF DESCRIPTION OF THE DRAWINGS

FIG. 1 is a structural schematic view of a prismatic-housing battery of Embodiment 1 of the present disclosure.
FIG. 2 is a structural schematic view of a cell of Embodiment 1 of the present disclosure.
FIG. 3 is a surface area distribution diagram of the cell of Embodiment 1 of the present disclosure.
FIG. 4 is a perspective view of the cell of Embodiment 1 of the present disclosure.
FIG. 5 is a plan view of a specific implementation scheme of a first insulation tape of Embodiment 1 of the present disclosure.
FIG. 6 is a perspective view of a cell assembly in FIG. 5.
FIG. 7 is a plan view of another specific implementation scheme of the first insulation tape of Embodiment 1 of the present disclosure.
FIG. 8 is a perspective view of a cell assembly in FIG. 7.
FIG. 9 is a schematic view of a configuration position of the first insulation tape on a surface of the cell of Embodiment 1 of the present disclosure.
FIG. 10 is a schematic view of a configuration position of a first sub-insulation tape on the surface of the cell of Embodiment 1 of the present disclosure.
FIG. 11 is a schematic view (1) of a processing state of a cell assembly of Embodiment 1 of the present disclosure.
FIG. 12 is a schematic view (2) of a processing state of the cell assembly of Embodiment 1 of the present disclosure.
FIG. 13 is a schematic view (3) of a processing state of the cell assembly of Embodiment 1 of the present disclosure.
FIG. 14 is a structural view (1) of a cell assembly of a prismatic-housing battery of Embodiment 2 of the present disclosure.
FIG. 15 is a structural view (2) of the cell assembly of the prismatic-housing battery of Embodiment 2 of the present disclosure.
FIG. 16 is a structural view of a cell assembly of a prismatic-housing battery of Embodiment 3 of the present disclosure.
FIG. 17 is a structural view (1) of a cell assembly of a prismatic-housing battery of Embodiment 4 of the present disclosure.
FIG. 18 is a perspective view of the cell assembly in FIG. 17.
FIG. 19 is a structural view (2) of the cell assembly of the prismatic-housing battery of Embodiment 4 of the present disclosure.
FIG. 20 is a schematic view (1) of a processing state of the prismatic-housing battery of Embodiment 4 of the present disclosure.
FIG. 21 is a schematic view (2) of a processing state of the prismatic-housing battery of Embodiment 4 of the present disclosure.

### DESCRIPTION OF THE EMBODIMENTS

A preferred embodiment is given below and combined with the accompanying drawings to more clearly and completely illustrate the present disclosure.

### Embodiment 1

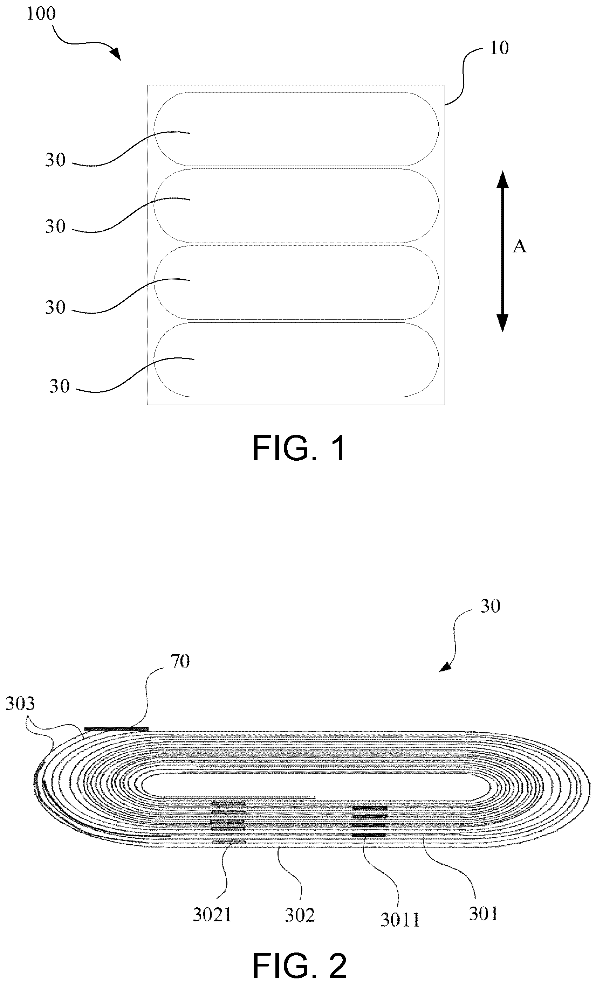

As shown in FIG. 1, a prismatic-housing battery 100 includes a housing 10 and a plurality of cells 30 disposed in the housing 10. Each of the cells 30 is stacked along a first direction A. As shown in FIG. 2, a single cell 30 is actually formed by winding a positive electrode 301, a negative electrode 302, and a separator 303. The positive electrode 301 and the negative electrode 302 are led out through a positive electrode tab 3011 and a negative electrode tab 3021 at one end of the cell 30. To avoid contact short circuit between the positive electrode 301 and the negative electrode 302, the positive electrode 301 and the negative electrode 302 are separated by two separators 303 with a relatively large coverage area covering the front and back surfaces of the electrodes to avoid short circuit. In addition, a finishing tape 80 is also disposed on the cell 30. The finishing tape 80 is adhered to a tail end of the separator 303 and fixes the tail end of the separator 303 to an outer peripheral surface of the cell 30 to finish the separator 303 of the cell 30.

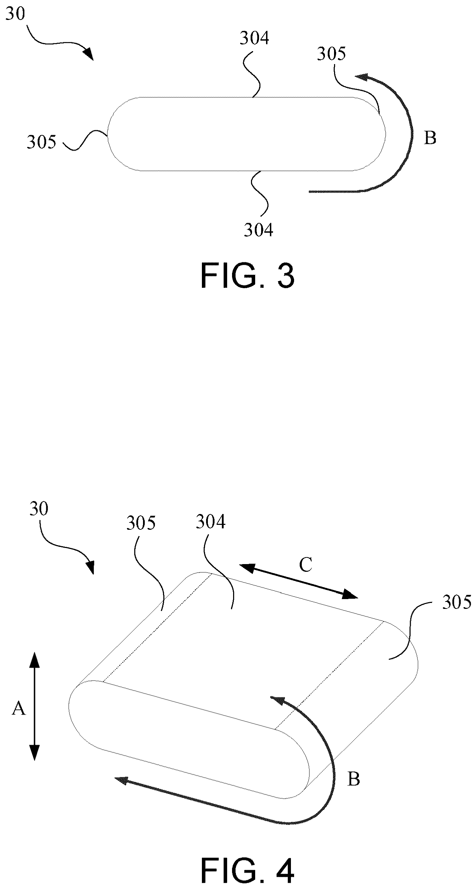

As shown in FIG. 3 and FIG. 4, along a winding direction B of the cell 30, the outer peripheral surface of the cell 30 includes two plane areas 304 and two corner areas 305 respectively connected to two opposite ends of the two plane areas 304. The two corner areas 305 are a first corner area 305a and a second corner area 305b respectively.

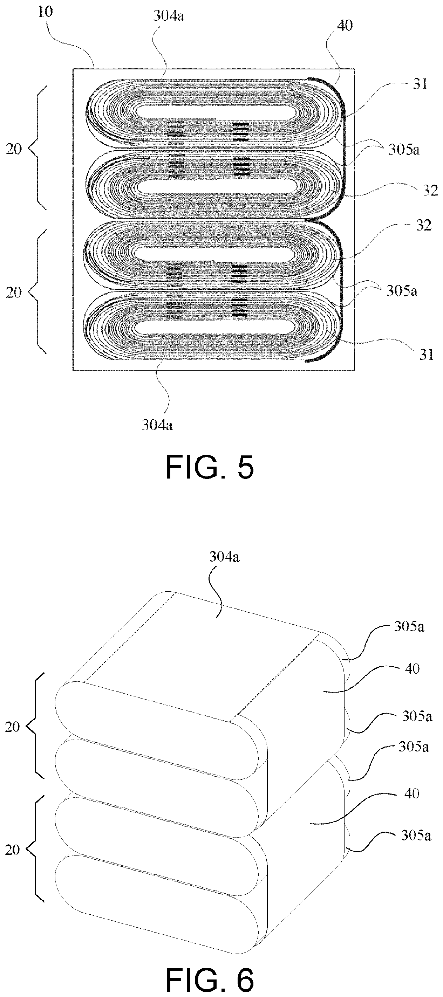

For the prismatic-housing battery 100 provided by the present disclosure, to facilitate the processing and insertion of each of the cells 30 into the housing, the cells 30 disposed in the housing 10 are divided into two cell assemblies 20. Each of the cell assembly 20 includes at least two stacked cells 30. As shown in FIG. 5 and FIG. 6, the prismatic-housing battery 100 in this embodiment has four cells 30, therefore they are divided into two cell assemblies 20. Each of the cell assemblies 20 includes two cells 30 stacked along a first direction A. The two plane areas 304 of each of the cells 30 are perpendicular to the first direction A. In the cell assembly 20, the cell 30 adjacent to the housing 10 along the first direction A is a first cell 31. The two plane areas 304 of the first cell 31 include a first plane area 304a adjacent to the housing 10, and the cell 30 in the cell assembly 20 adjacent to the other cell assembly 20 is a second cell 32.

As shown in FIG. 5 and FIG. 6, taking the cell assembly 20 positioned on the upper side in the figure as an example, the cell assembly 20 includes a first insulation tape 40, and the first insulation tape 40 covers a first corner area 305a of the second cell 32. One end of the first insulation tape 40 extends to the first corner area 305a of the first cell 31 through the first corner area 305a of the second cell 32 without further extending to the first plane area 304a of the first cell 31.

It is easier to process and manufacture the prismatic-housing battery 100 overall by forming the two cells 30 into the cell assembly 20, and then accommodating the two cell assemblies 20 in the housing 10. The cell assembly 20 covers the first corner area 305a of each of the cells 30 in the cell assembly 20 by setting the first insulation tape 40, so that the first insulation tape 40 produces a tightening effect on the corner area 305 of each of the cells 30, thus enabling the electrodes and the separator 303 in the first corner area 305a of the cell 30 to fit tightly, thereby mitigating the lithium plating phenomenon.

Additionally, the first insulation tape 40 extends to the surface of the first corner area 305a of the first cell 31 adjacent to the housing 10 along the first direction A, and is spaced apart from the first plane area 304a, so as to increase a coverage area of the first insulation tape 40 on the surface of the cell assembly 20, while avoiding an increase in an overall thickness dimension of the cell 30 due to the setting of the first insulation tape 40 in the plane area 304 of the cell 30, so that the prismatic-housing battery 100 is able to accommodate more cells 30 along the first direction A to have a relatively higher energy density.

In other embodiments, in the condition that a single cell assembly 20 includes three or more cells 30, the first insulation tape 40 should also extend to the first corner area 305a of the first cell 31 adjacent to the housing 10 through the first corner area 305a of the second cell 32 adjacent to the other cell assembly 20, thereby simultaneously contacting the first corner area 305a of all cells 30 in the cell assembly 20.

Specifically, the prismatic-housing battery 100 in FIG. 5 and FIG. 6 is a specific implementation scheme provided by the present embodiment: the first insulation tapes 40 of the two cell assemblies 20 cover the right side of the cell 30 of the cell assembly 20. Therefore, in the prismatic-housing battery 100 provided in FIG. 5, the first corner areas 305a of the cells 30 of the two cell assemblies 20 are both on the right side.

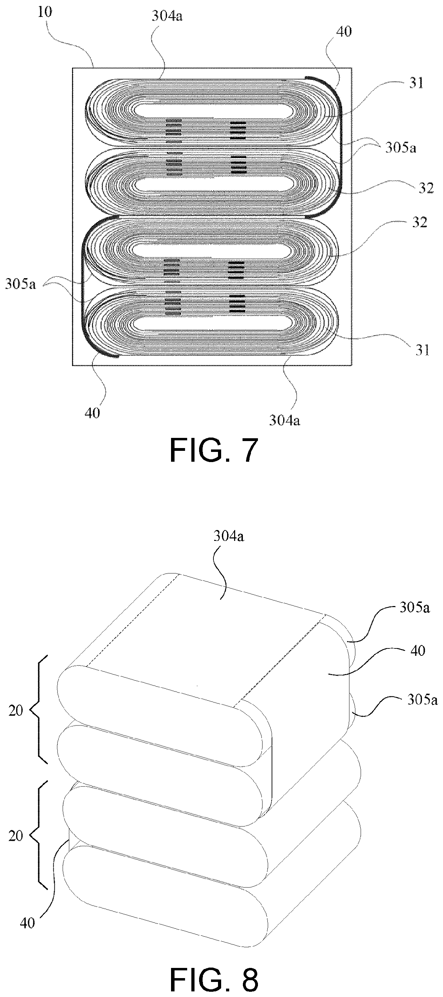

In other specific implementation schemes, as shown in FIG. 7 and FIG. 8, the right side of the cell 30 of the cell assembly 20 positioned on the upper side in the figure is covered with the first insulation tape 40, and the left side of the cell 30 of the cell assembly 20 positioned on the lower side in the figure is covered with the first insulation tape 40. Therefore, in the prismatic-housing battery 100 provided in FIG. 7, the first corner areas 305a of the cells 30 of the cell assemblies 20 positioned on the upper side in the figure are all on the right side, while the first corner areas 305a of the cells 30 of the cell assemblies 20 positioned on the lower side in the figure are on the left side. Of course, the above two specific implementation schemes are only for illustrative purposes, and the first insulation tape 40 may be disposed on the surface on one side of the cell assembly 20 as required.

Specifically in the present embodiment, one end of the first insulation tape 40 disposed on the second cell 32 is a junction between the first corner area 305a and the plane area 304 of the second cell 32. In this way, by setting one end of the first insulation tape 40 at the junction between the first corner area 305a and the plane area 304 of the second cell 32, it is possible to increase a coverage area of the first insulation tape 40 on the corner area 305 of the cell 30.

One end of the first insulation tape 40 is disposed at the junction between the first corner area 305a and the plane area 304 of the second cell 32 without extending to the surface of the plane area 304, which may avoid the increase in the overall thickness dimension of the cell 30 due to the setting of the first insulation tape 40 in the plane area 304 of the cell 30, so that the prismatic-housing battery 100 is able to accommodate more cells 30 along the first direction A to have a relatively higher energy density. Of course, in other embodiments, one end of the first insulation tape 40 disposed on the second cell 32 may also not extend to the junction between the first corner area 305a and the plane area 304 of the second cell 32, or directly extend to the plane area 304 of the second cell 32 through the first corner area 305a of the second cell 32.

Meanwhile, one end of the first insulation tape 40 disposed on the first cell 31 is also at a junction between the first corner area 305a and the first plane area 304a of the first cell 31, which may avoid the increase in the overall thickness dimension of the cell 30 due to the setting of the first insulation tape 40 in the first plane area 304a of the first cell 31, while ensuring a coverage area of the first cell 31 on the first corner area 305a of the first cell 31, thereby enabling the separator and the electrodes at that position to fit more tightly.

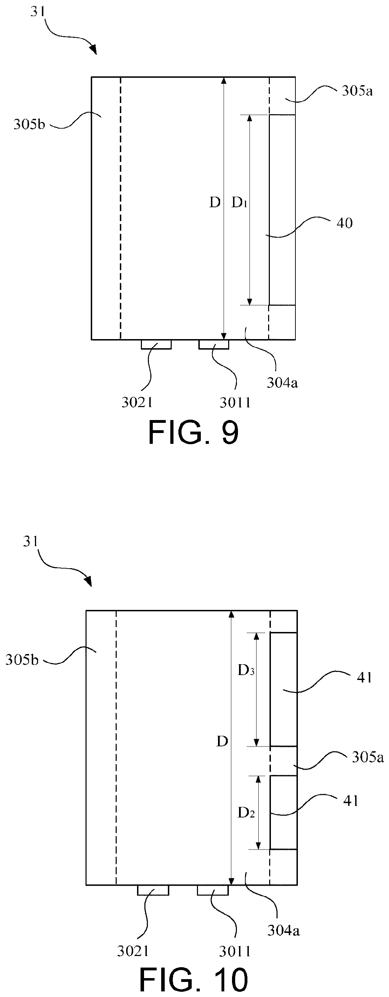

Specifically, as shown in FIG. 9, which is a top view of the first cell 31 of the cell assembly 20 positioned on the upper side in FIG. 5 and FIG. 7, it can be seen from the figure that the first insulation tape 40 extends to the first corner area 305a on the right side without extending to the first plane area 304a at the top of the cell 30. To improve an effective area between the first insulation tape 40 and the corner area 305 of the cell 30, and allow the first insulation tape 40 to better tighten the electrodes and the separator 303 of the cell 30, a width D₁ of the first insulation tape 40 should be set to be greater than or equal to 60% of a width D of the separator 303, so as to ensure that the first insulation tape 40 covers and fits the surface of the cell 30 over a large area. Meanwhile, the width D₁ of the first insulation tape 40 should be set to be less than or equal to 100% of the width D of the separator 303 to avoid both sides of the first insulation tape 40 from exceeding the separator 303 and being unable to be inserted into the housing. More preferably, the width D₁ of the first insulation tape 40 should be set to be less than or equal to 90% of the width D of the separator 303.

Furthermore, the first insulation tape 40 may not necessarily be formed by a single insulation tape with a large width, but may also be formed by multiple narrow insulation tapes together. For example, in another specific implementation scheme of this embodiment, the first insulation tape 40 includes two first sub-insulation tapes 41. The two first sub-insulation tapes 41 cover the first corner area 305a of the second cell 32, as shown in FIG. 10, one end of the two first sub-insulation tapes 41 extends to the first corner area 305a of the first cell 31, and the two first sub-insulation tapes 41 are arranged at intervals along a width direction C of the separator of the cell 30.

In the condition where the first insulation tape 40 is formed by multiple first sub-insulation tapes 41 together, along the width direction C of the separator, a sum of widths (D₂+D₃ in this embodiment) of respective first sub-insulation tapes 41 should be set to be greater than or equal to 60% of the width D of the separator 303. Of course, in other embodiments, three or more first sub-insulation tapes 41 may also be adopted to respectively cover the surface of the cell assembly 20 to replace a single insulation tape with a large width with multiple narrow insulation tapes. In this way, it is possible to tighten the corner area 305 of the cell 30, and adopting multiple narrow insulation tapes may reduce processing difficulty.

Additionally, to improve heat dissipation effect, the first insulation tape 40 may also adopt tapes with a heat dissipation capacity, so that the first insulation tape 40 covering the surface of the cell assembly has an improved heat dissipation effect.

Preferably, a tape thickness of the first insulation tape 40 has a value ranging from 10µm to 60µm. A thickness of an adhesive layer has a value ranging from 5µm to 30µm, and the thickness of the tape may normally be twice the thickness of the adhesive layer. Additionally, the setting of the first insulation tape 40 should not be overlapped with the finishing tape 80 and a thermal conductive tape (not shown in the figure) on the surface of the cell 30 to avoid tape overlap which would increase thickness and occupy more space along the first direction A inside the housing.

By setting the first insulation tape 40 in the first corner areas 305a of all cells 30 of the cell assembly 20, the prismatic-housing battery 100 may also utilize the first insulation tape 40 to fix the relative positions of the respective cells 30 within the cell assembly 20, thus facilitating connection between tabs of the respective cells 30.

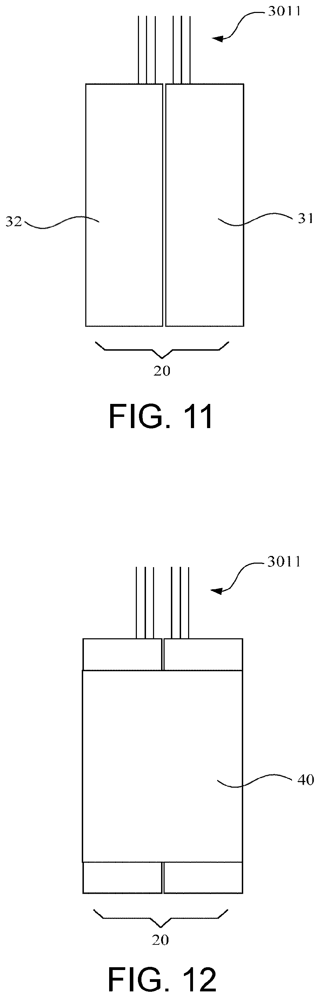

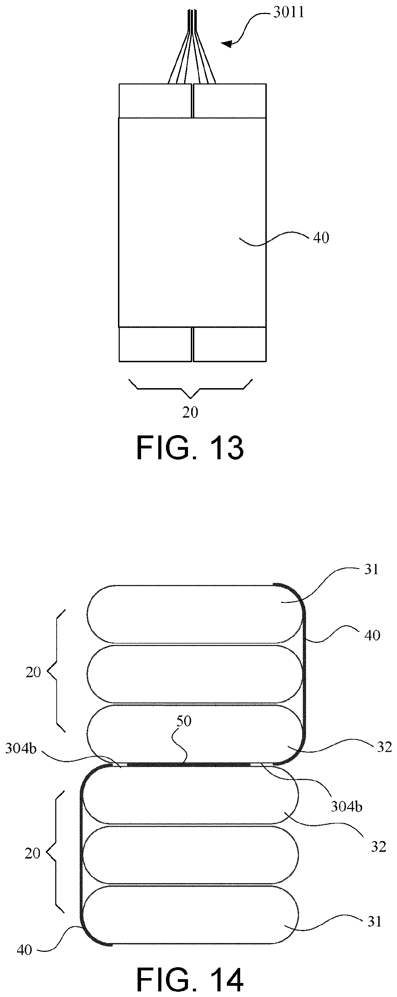

Specifically, when each of the cell assemblies 20 is processed, as shown in FIG. 11, each of the cells 30 within the cell assembly 20 is first stacked together along the first direction A, so that the respective cells 30 are in alignment. Then, as shown in FIG. 12, the first insulation tape 40 is adhered to the first corner areas 305a of the respective cells 30, fixing the positions of the respective cells 30. Finally, as shown in FIG. 13, the positive electrode tabs 3011 of the respective cells 30 are gathered together and welded, while the negative electrode tabs 3021 of the cells 30 are gathered together and welded. In the condition where the two cells 30 form the cell assembly 20 as embodied in the present embodiment, the tabs of the cells 30 may be disposed close to another cell 30, so as to reduce the difficulty of gathering and welding these tabs together, thereby facilitating processing.

### Embodiment 2

The present embodiment also provides a prismatic-housing battery 100, the structure of which is substantially the same as the prismatic-housing battery 100 in Embodiment 1, with the difference being: in the present embodiment, the prismatic-housing battery 100 further includes a heat dissipation medium 50. The heat dissipation medium 50 is disposed between two adjacent cell assemblies 20 for improving the heat dissipation capacity of the cell assemblies 20.

A preferred range of a thermal conductivity coefficient of the heat dissipation medium 50 is between 0.1 and 1.0. The thermal conductive layer of the heat dissipation medium 50 may be a polymer material (for example PTFE, PET, GPO, RF and other materials), an inorganic thermal conductive material (for example, aluminum foil, silicone gel and other materials) or metal material (for example, a metal sheet). Specifically in the present embodiment, the heat dissipation medium 50 is formed by adhering an insulation tape with the heat dissipation capacity to the surface of the cell assembly 20. In the condition where the heat dissipation medium 50 is an insulation tape, the thermal conductive layer of the tape is constituted by heat dissipation materials existing in the related art such as a polymer material or an inorganic thermal conductive material.

By setting the heat dissipation medium 50 with the thermal conductive capacity between the cell assemblies 20, the heat conduction capacity of each of the cell assemblies 20 may be improved, thus enhancing the overall heat dissipation capacity of the prismatic-housing battery 100.

Specifically, as shown in FIG. 14, in the present embodiment, the two plane areas 304 of the second cell 32 include a second plane area 304b adjacent to the other cell assembly 20, the heat dissipation medium 50 in the form of insulation tape is disposed between the two second plane areas 304b of the two cell assemblies 20.

The heat dissipation medium 50 should be arranged away from the finishing tape 80 and the thermal conductive tape on the surface of the cell 30 to avoid excessively occupying the space of the cell assembly 20 along the first direction A.

Additionally, in the condition where the heat dissipation medium 50 is disposed between the two second plane areas 304b, one end of the heat dissipation medium 50 may be connected with the end portion of the first insulation tape 40, so as to strengthen the connection relationship between the first insulation tape 40 and each of the cells 30, thus improving the tightening capacity of the cell 30 for each of the corner areas 305. Specifically, there may be a variety of methods of connecting the heat dissipation medium 50 and the first insulation tape 40.

For example, the heat dissipation medium 50 and the first insulation tape 40 may be connected through covering each other. The continuation of a heat conduction path of the heat dissipation medium 50 and the first insulation tape 40 enables the heat of the heat dissipation medium 50 to be transmitted outward through the first insulation tape 40 to have a better heat dissipation capacity.

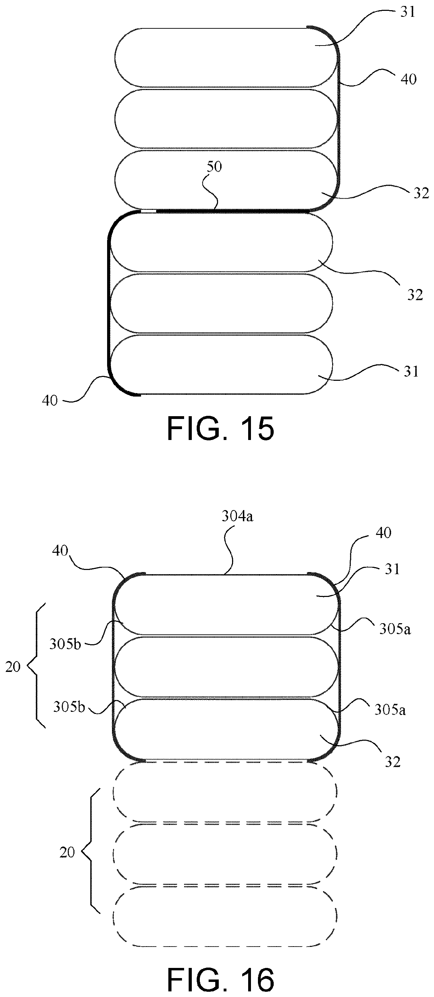

In another example, in the condition where the heat dissipation medium 50 is in the form of insulation tape, if the insulation tape adopted by the heat dissipation medium 50 is in the same form as the first insulation tape 40, then the heat dissipation medium 50 and the first insulation tape 40 of one of the cell assemblies 20 may be commonly formed through a single insulation tape. Specifically, as shown in FIG. 15, the heat dissipation medium 50 in this embodiment is commonly formed with the first insulation tape 40 of the cell assembly 20 positioned on the upper side in the figure through a single insulation tape. Specifically, a lower end of the first insulation tape 40 forming the upper cell assembly 20 is directly adhered to the second plane area 304b of the second cell 32 to form the heat dissipation medium 50. In this way, it may be possible to improve the heat dissipation capacity of the cells 30, and may also further strengthen the connection relationship between the first insulation tape 40 and the cell 30.

### Embodiment 3

This embodiment also provides a prismatic-housing battery 100, the structure of which is substantially the same as the prismatic-housing battery 100 in Embodiment 1, the difference lies in: in the present embodiment, in the condition where the cell assembly 20 is provided with the first insulation tape 40 to tighten the first corner areas 305a of the respective cells 30 of the cell assembly 20, the second corner areas 305b of the respective cells 30 of the cell assembly 20 are also tightened. Specifically, as shown in FIG. 16, the first insulation tape 40 also covers all second corner areas 305b of the cell assembly 20. To be precise, a portion of the first insulation tape 40 disposed in the first plane area 304a of the first cell 31 is intermittent, and the first insulation tape 40 does not extend to the first plane area 304a of the first cell 31. By making the first insulation tape 40 to break in the first plane area 304a, the first insulation tape 40 releases stress under the premise of wrapping the cell surface over a large area, avoiding stress transmission. Meanwhile, the first insulation tape 40 does not extend to the first plane area 304a while wrapping the first corner areas 305a and second corner areas 305b of the respective cells 30, thereby avoiding occupying the space of the cell assembly 20 along the first direction A, and thus realizing a compact layout.

Specifically in this embodiment, the first insulation tape 40 that is intermittent in the first plane area 304a is formed by two tapes respectively wrapping the first corner area 305a side and the second corner area 305b side of the cell assembly 20.

### Embodiment 4

This embodiment also provides a prismatic-housing battery 100, the structure of which is substantially the same as the prismatic-housing battery 100 in Embodiment 1, the difference lies in: on basis of the prismatic-housing battery 100, a second insulation tape 70 is further included. Both ends of the second insulation tape 70 respectively cover the two cell assemblies 20 to fix positions of the two cell assemblies 20, thereby avoiding shift of the cell assemblies 20 during the processing and manufacturing process, facilitating the accommodation of the cells 30 in the housing 10, and also facilitating the implementation of subsequent manufacturing processes (e.g., connecting tabs of the two cell assemblies 20).

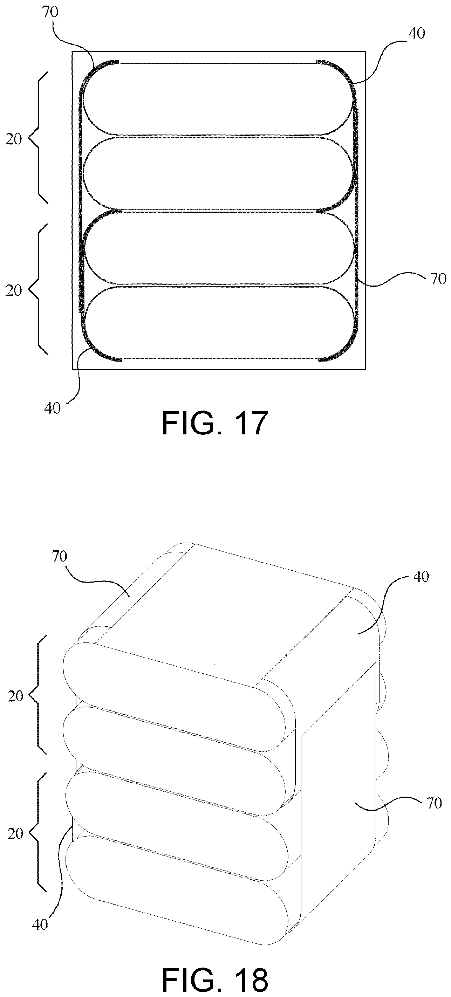

Specifically, as shown in FIG. 17, on basis of the prismatic-housing battery 100 provided in Embodiment 1, the second insulation tapes 70 are respectively disposed on both sides of the cell assembly 20. An upper end of the second insulation tape 70 positioned on the left side in the figure covers the surface of the cell 30 of the upper cell assembly 20 (for example, in this embodiment, extending to the second corner area 305b of the first cell 31). A lower end of the left second insulation tape 70 covers the surface of the first insulation tape 40 of the lower cell assembly 20. An upper end of the second insulation tape 70 positioned on the right side in the figure covers the surface of the first insulation tape 40 of the upper cell assembly 20 in the figure. A lower end of the right second insulation tape 70 covers the surface of the cell 30 of the lower cell assembly 20 (for example, in this embodiment, extending to the second corner area 305b of the first cell 31). As may be seen from FIG. 18, a width of the second insulation tape 70 may be different from that of the first insulation tape 40, for example, by being slightly narrower than that of the first insulation tape 40.

The second insulation tape 70 is extended to the corner area 305 of the first cell 31 of the cell assembly 20 to tighten the corner area 305 on that side of the cell assembly 20 through the second insulation tape 70, thereby enabling the electrodes and the separator 303 at the corner area 305 on that side to fit more closely. In the meantime, the second insulation tape 70 covers the surface of the first insulation tape 40 of the cell assembly 20 to structurally strengthen the first insulation tape 40, thus improving the tightening effect of the first insulation tape 40 on the corner area 305 of the covered cell 30. This scheme of extending one end of the second insulation tape 70 to the surface of the first insulation tape 40 of one cell assembly 20, while extending the other end to the corner area 305 of the first cell 31 of the other cell assembly 20 may be adapted to different core combining schemes of the cell 30, thereby avoiding interference with the already adhered first insulation tape 40.

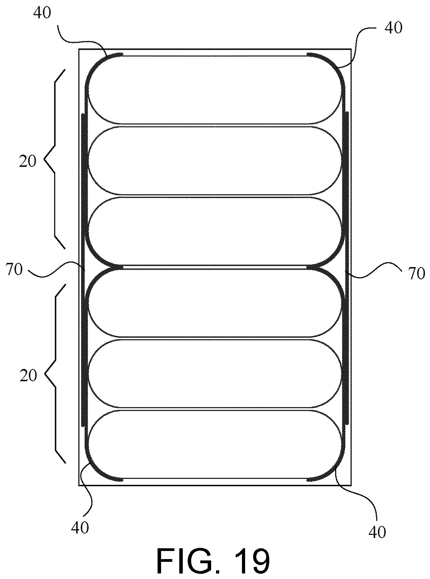

Additionally, as shown in FIG. 19, on basis of the prismatic-housing battery 100 provided in Embodiment 3, the second insulation tapes 70 are respectively set on both sides of the cell assembly 20. The upper end of the second insulation tape 70 positioned on the left side in the figure covers the surface of the first insulation tape 40 of the upper cell assembly 20. The lower end of the left second insulation tape 70 covers the surface of the first insulation tape 40 of the lower cell assembly 20. The upper end of the second insulation tape 70 positioned on the right side in the figure covers the surface of the first insulation tape 40 of the upper cell assembly 20. The lower end of the right second insulation tape 70 covers the surface of the first insulation tape 40 of the lower cell assembly 20.

Specifically, in other embodiments, the second insulation tape 70 may be selectively to respectively cover both sides of the two cell assemblies 20, or only cover one side of the two cell assemblies 20, the specific setting design may be set according to actual conditions. The coverage position, tape thickness and adhesive layer thickness of the second insulation tape 70 may be derived from the specific setting design of the first insulation tape 40 in the above embodiments.

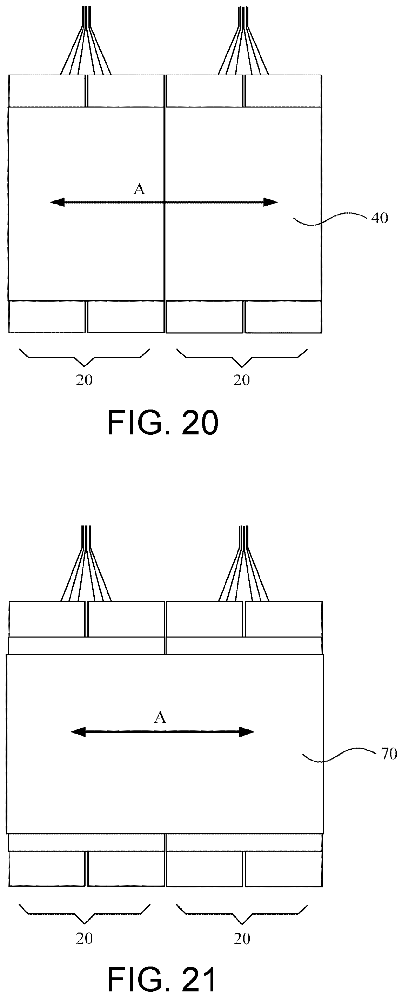

By setting the second insulation tape 70 to respectively cover the two cell assemblies 20 to fix the positions of the two cell assemblies 20, it is possible to facilitate the implementation of subsequent processing processes. Specifically, as shown in FIG. 20, the two cell assemblies 20 are first stacked together along the first direction A. Then, as shown in FIG. 21, the second insulation tape 70 provides coverage between the two cell assemblies 20. The second insulation tape 70 may cover the surface of the cell 30 of the cell assembly 20, or cover the surface of the first insulation tape 40 of the cell assembly 20, the specific coverage design may be set according to actual conditions. Finally, the two cell assemblies 20 fixed together by the second insulation tape 70 are loaded into the housing 10, and subsequent processing operations of the prismatic-housing battery 100 are performed.

## Claims

1. A prismatic-housing battery (100), comprising a housing (10) and two cell assemblies (20) accommodated in the housing (10), each of the cell assemblies (20) comprising at least two cells (30) stacked along a first direction (A), wherein an outer peripheral surface of each of the cells (30) along a winding direction (B) comprises two plane areas (304) and a first corner area (305a) and a second corner area (305b) respectively connected to two opposite ends of the two plane areas (304), and the two plane areas (304) are both perpendicular to the first direction (A), the cell (30) adjacent to the housing (10) along the first direction (A) in the cell assemblies (20) is a first cell (31), the two plane areas (304) of the first cell (31) comprise a first plane area (304a) adjacent to the housing (10), the cell (30) adjacent to the other one of the cell assemblies (20) is a second cell (32);
each of the cell assemblies (20) further comprises a first insulation tape (41), the first insulation tape (41) covers at least a portion of a first corner area (305a) of the second cell (32), and one end of the first insulation tape (41) extends to a first corner area (305a) of the first cell (31) through the first corner area (305a) of the second cell (32).

2. The prismatic-housing battery (100) according to claim 1, wherein one end of the first insulation tape (41) extends to a junction between the first corner area (305a) and the first plane area (304a) of the first cell (31) through the first corner area (305a) of the second cell (32).

3. The prismatic-housing battery (100) according to claim 1, wherein the other end of the first insulation tape (41) is disposed at a junction between the first corner area (305a) of the second cell (32) and a plane area (304) of the second cell (32).

4. The prismatic-housing battery (100) according to claim 1, wherein the prismatic-housing battery (100) further comprises a heat dissipation medium (50), the heat dissipation medium (50) is disposed between the two cell assemblies (20).

5. The prismatic-housing battery (100) according to claim 4, wherein two of the plane areas (304) of the second cell (32) comprise a second plane area (304b) adjacent to the other one of the cell assemblies (20), the heat dissipation medium (50) is disposed between the second plane areas (304b) of the two cell assemblies (20), the heat dissipation medium (50) is connected with an end portion of the first insulation tape (41).

6. The prismatic-housing battery (100) according to claim 4, wherein the cell (30) is formed by winding a positive electrode (301), a negative electrode (302) and a separator (303), the separator (303) is sandwiched between the positive electrode (301) and the negative electrode (302), and a tail end of the separator (303) extends beyond tail ends of the positive electrode (301) and the negative electrode (302);
the prismatic-housing battery (100) further comprises a finishing tape (80), the finishing tape (80) is adhered to the tail end of the separator (303) and fixes the tail end of the separator (303) to the outer peripheral surface of the cell (30), the finishing tape (80) and the heat dissipation medium (50) are disposed in a staggered arrangement on the outer peripheral surface of the cell (30).

7. The prismatic-housing battery (100) according to any one of claims 1-6, wherein the prismatic-housing battery (100) further comprises a second insulation tape (70), the second insulation tape (70) covers at least a portion of the first corner area (305a) of the second cell (32) of the two cell assemblies (20);
or, the second insulation tape (70) covers at least a portion of a second corner area (305b) of the second cell (32) of the two cell assemblies (20).

8. The prismatic-housing battery (100) according to any one of claims 1-6, wherein the prismatic-housing battery (100) further comprises a second insulation tape (70), at least one end of the second insulation tape (70) extends to a second corner area (305b) of the first cell (31) of at least one of the cell assemblies (20);
and/or, the at least one end of the second insulation tape (70) extends to a surface of the first insulation tape (41) of the at least one of the cell assemblies (20).

9. The prismatic-housing battery (100) according to any one of claims 1-6, wherein the cell (30) is formed by winding the positive electrode (301), the negative electrode (302) and the separator (303), the separator (303) is sandwiched between the positive electrode (301) and the negative electrode (302), along a width direction (C) of the separator (303), a width D₁ of the first insulation tape (41) has a value ranging from 60% to 90% of a width D of the separator (303).

10. The prismatic-housing battery (100) according to claim 9, wherein the first insulation tape (41) comprises at least two first sub-insulation tapes (41), each of the first sub-insulation tapes (41) covers at least a portion of the first corner area (305a) of the second cell (32), and one end of each of the first sub-insulation tapes (41) extends to the first plane area (304a) through the first corner area (305a) of the first cell (31), each of the first sub-insulation tapes (41) is arranged at intervals along the width direction (C) of the separator (303) of the cell (30).
